# FASCICULE DE BREVET EUROPEEN

(11) **EP 2 293 977 B1**
(45) Date de publication et mention de la délivrance du brevet: **24.10.2012**
(21) Numéro de dépôt: 09784233.0
(22) Date de dépôt: 25.06.2009
(51) Int. Cl.: B64C 1/40, F16B 1/00

(54) **DISPOSITIF DE FIXATION DE MATELAS ISOLANTS DANS UN FUSELAGE D'AÉRONEF**
SYSTEM ZUR SICHERUNG VON ISOLATIONSMATTEN IN EINEM FLUGZEUGRUMPF
SYSTEM FOR SECURING INSULATING MATS IN AN AIRCRAFT FUSELAGE

(30) Priorité: 07.07.2008 FR 0803845
(43) Date de publication de la demande: 16.03.2011
(73) Titulaire: Airbus Operations, 31060 Toulouse (FR)
(72) Inventeur: LE LOUARN, Amélie, F-31480 Le Gres (FR)
(74) Mandataire: Hartmann, Jean-Luc
(86) Numéro de dépôt international: PCT/FR2009/000791
(87) Numéro de publication internationale: WO 2010/004121

(56) Documents cités:
- EP-A- 0 320 377
- WO-A-2007/131583
- DE-A1- 4 208 493
- GB-A- 1 049 510
- US-A- 5 263 665

## Description

La présente invention concerne un dispositif de fixation de matelas isolants d'un fuselage d'aéronef et un procédé de pose de matelas isolants dans un fuselage d'aéronef.

Un fuselage d'aéronef comprend usuellement une ossature formée de cadres et éventuellement de lisses, et une peau fixée auxdits cadres et lisses. Les faces intérieures du fuselage sont au moins partiellement recouvertes par des matelas isolants réalisant une isolation thermique et acoustique de l'espace intérieur délimité par le fuselage. Les matelas isolants connus se présentent usuellement sous la forme de lés ou de panneaux souples ; ils comprennent généralement une couche isolante en laine de verre enfermée entre deux films de couverture en matière plastique, thermosoudés aux quatre bords du matelas. Entre deux cadres successifs du fuselage, la peau dudit fuselage est recouverte de matelas isolants dits matelas de peau, lesquels matelas de peau sont généralement plaqués contre les lisses du fuselage. Chaque cadre du fuselage est par ailleurs recouvert par un matelas (ou plusieurs matelas adjacents se succédant le long du pourtour du cadre) dit matelas de cadre.

En ce qui concerne la fixation des matelas isolants aux lisses de l'aéronef, il est connu d'utiliser des dispositifs de fixation ponctuels comprenant :
- une base qui vient s'emboîter sur la lisse et serrer cette dernière en vue de la fixation du dispositif sur la lisse ;
- une tige traversant le matelas, à l'extrémité de laquelle est enfilée une rondelle qui maintient le matelas contre la base du dispositif.

Un tel dispositif de fixation est décrit dans GB 1,049,510, US 5,263,665 ou WO 2007/31583, qui constitue l'art antérieur le plus proche. Pour chaque dispositif de fixation placé sur la lisse, un trou doit être réalisé dans le matelas isolant pour le passage de la tige du dispositif. Les inconvénients liés à ces trous sont détaillés plus loin. Cependant, ces dispositifs de fixation connus présentent l'avantage de pouvoir être fixés aux lisses sans qu'aucun trou ne soit ménagé dans ces dernières.

En ce qui concerne la fixation des matelas isolants aux cadres de l'aéronef, il est usuel d'utiliser des dispositifs de fixation ponctuels constitués de :
- un corps allongé traversant le cadre et les matelas qui recouvrent ce dernier (à savoir généralement deux matelas de peau et un matelas de cadre), et
- deux pièces d'extrémité, chaque pièce d'extrémité s'engageant à une extrémité du corps allongé et venant serrer les matelas contre une âme du cadre.

On connaît par exemple un dispositif de fixation dont les pièces d'extrémité sont réalisées par des rondelles et dont le corps allongé comporte d'une part une collerette centrale destinée à venir en butée contre une face de l'âme du cadre, et d'autre part des épaulements tronconiques de part et d'autre de la collerette pour le maintien des deux rondelles.

Par ailleurs, les systèmes (équipements, câblages électriques, réseaux hydrauliques et pneumatiques...) agencés à l'intérieur du fuselage sont accrochés à la structure de ce dernier, et en particulier aux cadres. Pour des raisons thermiques et d'accessibilité, ces systèmes sont agencés, non pas entre la structure du fuselage et les matelas isolants, mais sur ces derniers.

Les cadres du fuselage sont ainsi percés à la fois de trous pour la mise en place des dispositifs de fixation des matelas (trous de réception des corps allongés de ces derniers), et de trous pour la fixation des systèmes. Ces trous fragilisent les cadres, obligent souvent à prévoir des renforts structuraux et compliquent donc la conception du fuselage.

De même, les matelas isolants sont percés à la fois de trous pour le passage des corps allongés des dispositifs de fixation de matelas, et de trous pour le passage des moyens de fixation des systèmes. Ces trous dégradent les performances d'isolation des matelas, créant autant de ponts thermiques et acoustiques. Ils réduisent également leur étanchéité à l'eau (or les matelas isolants ont également pour fonction de drainer, jusqu'au fond de barque du fuselage, l'eau de condensation apparaissant sur la peau de ce dernier). En outre, la réalisation de ces trous complique considérablement la fabrication des matelas et grève leurs coûts de revient. En effet, au niveau de chaque trou réalisé dans le matelas, la couche isolante en laine de verre doit être remplacée par un disque en mousse, qui facilite la réalisation du trou et renforce le matelas autour dudit trou afin d'éviter que le matelas ne se déchire.

De surcroît, en cas de modification tardive (alors que l'aéronef est en phase d'assemblage par exemple) d'un cadre ou d'un système, il est nécessaire de réaliser un ou plusieurs trous supplémentaires dans le matelas concerné et/ou dans le cadre. Il est également nécessaire de reboucher le trou désormais inutilisé du matelas.

Pour réaliser un trou supplémentaire dans un matelas existant, il convient de coller une bande adhésive sur chaque face du matelas à l'emplacement du trou, découper un disque dans le matelas à l'emplacement du trou à l'aide d'un premier outil coupant spécifique, retirer le disque de matelas ainsi découpé et le remplacer par un disque de mousse, coller à nouveau une bande adhésive sur chaque face du matelas de façon à recouvrir et maintenir le disque de mousse, percer le matelas au centre du disque de mousse à l'aide d'un deuxième outil coupant spécifique de façon à former le trou. Ce procédé est particulièrement long et fastidieux. Et il n'est pas non plus souhaitable de prévoir dès la conception du matelas un nombre important de trous ou fentes additionnels en vue d'éventuelles modifications futures, car ces trous et fentes réduisent les performances d'isolation et d'étanchéité du matelas et grèvent ses coûts de revient.

La réalisation tardive de trous dans un cadre pose également problème. Ces trous affaiblissent les cadres et, parce qu'ils ne sont pas prévus lors de la conception du fuselage, obligent très souvent à ajouter des renforts structuraux. De surcroît, lorsque le cadre est en un matériau composite, la réalisation d'un trou requiert l'utilisation d'un outil spécifique, génère des copeaux nocifs -et donc dangereux pour l'opérateur chargé de réaliser le trou-, et provoque des délaminations du matériau composite autour du trou. Ces problèmes sont plus difficiles à gérer lorsque la réalisation du trou n'est pas prévue d'origine et ne s'effectue pas au poste de fabrication du cadre.

L'invention vise à pallier ces inconvénients en proposant un dispositif de fixation de matelas isolants sur un cadre, qui permette de limiter le nombre de trous réalisés dans les matelas isolants. L'invention vise aussi à simplifier la fabrication des matelas isolants et à réduire leurs coûts de revient.

Dans une version préférée, l'invention vise également à fournir un dispositif de fixation qui permette de limiter le nombre de trous réalisés dans le cadre.

Un autre objectif de l'invention est de fournir un procédé (non-revendiqué) de pose de matelas isolants dans un fuselage d'aéronef qui soit plus rapide et plus facile à mettre en oeuvre, et qui n'utilise aucun outil.

Un autre objectif de l'invention est de permettre de déposer puis de reposer aisément un matelas pour des raisons de maintenance.

Un autre objectif de l'invention est de limiter le temps de main d'oeuvre en cas de modification de l'emplacement d'un dispositif de fixation de matelas.

Pour ce faire, l'invention concerne un dispositif pour la fixation, à un cadre d'un fuselage d'un aéronef, d'au moins un matelas isolant, dit matelas de cadre, recouvrant au moins un tronçon dudit cadre, comprenant :
- un premier moyen d'accrochage par pincement, dit première pince de matelas de cadre, destiné à s'étendre d'un premier côté du cadre et adapté pour recevoir et pincer un premier bord du matelas de cadre,
- un deuxième moyen d'accrochage par pincement, dit deuxième pince de matelas de cadre, destiné à s'étendre du second côté du cadre et adapté pour recevoir et pincer, seul ou en coopération avec un ou plusieurs éléments structurels de l'aéronef, un deuxième bord du matelas de cadre, opposé au premier bord.
- le premier moyen d'accrochage par pincement et le deuxième moyen d'accrochage par pincement comportant chacun une ouverture dans laquelle peuvent être insérés respectivement un premier bord du matelas de cadre et un second bord du matelas de cadre et lesdits moyens d'accrochage étant aptes à serrer le bord de matelas de cadre correspondant de façon à empêcher son extraction de l'ouverture correspondante, au moins ponctuellement.

Ainsi, le dispositif de fixation selon l'invention ne traverse pas le matelas de cadre, de sorte qu'il n'est pas nécessaire de ménager des trous dans ce dernier. A cet égard, on notera que les termes "pincement" et "pince" précédemment employés font référence à des moyens d'accrochage qui présentent, selon le sens usuel de ces termes, une ouverture dans laquelle peut être insérée une portion de l'objet à accrocher (à savoir le bord d'un matelas isolant) et qui sont aptes à serrer cette portion de l'objet (au moins ponctuellement) de façon à empêcher son extraction de l'ouverture. Ces termes ne couvrent pas des moyens d'accrochage du type de ceux comprenant une tige traversant l'objet à accrocher et une rondelle (ou autre pièce telle qu'un écrou) enfilée à l'extrémité libre de la tige en vue du maintien de l'objet.

Le dispositif selon l'invention peut être utilisé pour fixer également au moins un autre matelas isolant, dit matelas de peau, recouvrant une portion de peau du fuselage d'un premier côté du cadre. Il comprend alors avantageusement un troisième moyen d'accrochage par pincement, dit pince de matelas de peau, destiné à s'étendre du premier côté du cadre et adapté pour recevoir et pincer un bord dudit matelas de peau.

De préférence, le dispositif selon l'invention permet également la fixation d'un autre matelas isolant, dit deuxième matelas de peau, recouvrant une portion de peau du fuselage du second côté du cadre. Il comprend alors avantageusement un quatrième moyen d'accrochage par pincement, dit deuxième pince de matelas de peau, destiné à s'étendre du second côté du cadre et adapté pour recevoir et pincer, seul ou en coopération avec un ou plusieurs éléments structurels de l'aéronef, un bord du deuxième matelas de peau.

Ainsi, aucun trou n'est prévu dans les différents matelas pour permettre leur accrochage au dispositif de fixation selon l'invention. Il n'est donc pas nécessaire de renforcer les matelas en laine de verre par des disques en mousse dans leur zone d'accrochage au dispositif de fixation. La fabrication des matelas en est simplifiée, et leurs coûts de revient réduits. Par ailleurs, le déplacement tardif d'un dispositif de fixation selon l'invention n'entraîne aucune modification sur les matelas qu'il porte, à tout le moins dans le cas d'un dispositif dont les deuxièmes pinces de matelas de cadre et de matelas de peau sont adaptées pour pincer et maintenir seules le matelas correspondant.

Avantageusement, le dispositif de fixation comprend de plus une portion formant crochet adaptée pour venir coiffer une aile du cadre et pincer ce dernier, seule ou en coopération avec un élément structurel de l'aéronef, de façon à assurer la fixation du dispositif de fixation au cadre,

Ainsi, le montage du dispositif de fixation de matelas selon l'invention sur le cadre ne nécessite aucun trou dans ce dernier. En cas de modification tardive d'un système et/ou du cadre lui-même, la position du dispositif de fixation peut donc être ajustée sans qu'il ne soit nécessaire de percer le cadre ni de renforcer sa structure.

L'invention s'étend à un procédé (non-revendiqué) de pose de matelas isolants dans un fuselage d'un aéronef, caractérisé en ce qu'on fixe des matelas isolants à un cadre du fuselage par l'intermédiaire de dispositifs de fixation selon l'invention.

De façon usuelle, on recouvre une portion de peau du fuselage d'un premier côté du cadre à l'aide d'un premier matelas de peau, et on recouvre également, le cas échéant, une portion de peau du fuselage du second côté du cadre à l'aide d'un deuxième matelas de peau. Selon l'invention, on effectue également les étapes suivantes :
- on monte chaque dispositif de fixation sur le cadre ; le cas échéant, cette étape est exécutée par emboîtement de la portion formant crochet du dispositif de fixation sur une aile dudit cadre ; à noter que cette étape peut être réalisée avant ou après la mise en place des matelas de peau ;
- à chaque dispositif de fixation, on insère un bord du premier matelas de peau dans la première pince de matelas de peau dudit dispositif,
- le cas échéant, à chaque dispositif de fixation, on insère un bord du deuxième matelas de peau dans la deuxième pince de matelas de peau dudit dispositif ; à noter que ces deux étapes d'accrochage des deux matelas de peau (par insertion de leur bord respectif dans la pince de matelas de peau correspondante) peuvent être exécutées dans un ordre ou dans l'autre,
- on recouvre au moins un tronçon du cadre (et les dispositifs de fixation qu'il porte) à l'aide d'un matelas de cadre ; à noter que cette étape peut éventuellement être réalisée avant les étapes d'accrochage des matelas de peau,
- à chaque dispositif de fixation, on insère, dans la première pince de matelas de cadre dudit dispositif, un bord du matelas de cadre s'étendant du premier côté du cadre,
- à chaque dispositif de fixation, on insère, dans la deuxième pince de matelas de cadre dudit dispositif, un bord opposé du matelas de cadre s'étendant du second côté du cadre ; à noter que ces deux étapes d'accrochage du matelas de cadre aux première et deuxième pinces de matelas de cadre peuvent être exécutées dans un ordre ou dans l'autre.

L'ensemble de ces opérations de pose, ainsi que les opérations inverses de dépose d'un ou de plusieurs matelas (pour des raisons de maintenance par exemple), s'effectuent sans aucun outil.

Avantageusement, la portion formant crochet d'un dispositif de fixation selon l'invention est adaptée pour pouvoir être ouverte ou resserrée de façon à faciliter le montage du dispositif de fixation sur le cadre.

De préférence, le dispositif de fixation selon l'invention comporte un corps définissant au moins partiellement la portion formant crochet, lequel corps comprend deux pièces munies de moyens complémentaires d'assemblage par déformation élastique permettant l'assemblage et la séparation desdites pièces au niveau de la portion formant crochet. Comme précédemment défini, ces deux pièces, une fois assemblées sur l'aile du cadre, doivent notamment former (totalement ou partiellement) une portion formant crochet apte à venir pincer le cadre de façon à assurer, seule ,ou en coopération avec un élément structurel de l'aéronef, la fixation du dispositif de fixation audit cadre.

Par exemple, la portion formant crochet peut présenter une forme telle que le montage du dispositif de fixation sur le cadre doive s'effectuer en force et que l'effort de pincement exercé sur le cadre par la portion formant crochet seule suffise à maintenir en place ledit dispositif.

En variante ou en combinaison, notamment dans le cas d'un aéronef à fuselage en matériau composite, dans le procédé selon l'invention, chaque dispositif de fixation est disposé en regard d'une cornière d'un réseau structurel électrique de l'aéronef et est adapté pour coopérer avec ladite cornière (qui est un élément structurel de l'aéronef au sens de l'invention) en vue de garantir une fixation rigide du dispositif sur le cadre. En d'autres termes, cette variante de l'invention profite de la présence des cornières du réseau structurel électrique pour permettre de fixer des dispositifs de fixation de matelas isolants aux cadres du fuselage ou de renforcer leur fixation auxdits cadres, et ce sans qu'il ne soit nécessaire de réaliser des trous additionnels dans les cadres.

A noter que le corps peut être constitué de plus de deux pièces. A l'inverse, la version préférée précédemment définie n'exclut pas la possibilité de prévoir un corps réalisé en une seule pièce présentant une élasticité adaptée pour permettre l'emboîtement de la portion formant crochet sur l'aile du cadre. Dans ce dernier cas, afin de garantir la fixation du dispositif au cadre, il peut être préférable d'empêcher que cette portion formant crochet ne puisse s'ouvrir de façon accidentelle une fois le dispositif en place sur le cadre, par exemple en disposant le dispositif de fixation en regard et en appui contre une cornière du réseau structurel électrique.

Avantageusement, chaque pince de matelas de peau est portée par une face interne du corps destinée à être orientée vers le cadre, et chaque pince de matelas de cadre est portée par une face externe du corps destinée à être orientée dans une direction opposée au cadre.

Avantageusement, le dispositif de fixation de matelas selon l'invention comprend, pour chaque pince de matelas (de peau ou de cadre), des moyens de préhension adaptés pour permettre d'ouvrir ladite pince de façon à pouvoir y insérer le bord du matelas correspondant.

Avantageusement, chaque pince de matelas (de peau ou de cadre) du dispositif de fixation selon l'invention comprend au moins une lame apte à serrer le matelas correspondant contre le corps du dispositif.

Par exemple, la première pince de matelas de cadre et la première pince de matelas de peau comprennent chacune une lame enroulée en spirale et un pion d'élastomère en compression inséré dans ladite spirale de façon à presser une face de ladite lame contre le corps (et plus précisément contre une première membrure du corps).

La deuxième pince de matelas de cadre et la deuxième pince de matelas de peau peuvent être similaires aux premières pinces décrites au paragraphe précédent (lesdites deuxièmes pinces sont dans ce cas adaptées pour pincer et retenir seules les matelas correspondants).

En variante, dans le cas particulier où elles sont adaptées pour pincer les matelas correspondants en coopération avec une cornière d'un réseau structurel électrique de l'aéronef, la deuxième pince de matelas de cadre et la deuxième pince de matelas de peau comprennent chacune de préférence deux lames ressorts destinées à être pressées contre le corps (et plus précisément contre une deuxième membrure du corps) par ladite cornière et par le cadre, le corps présentant une lumière entre les deux lames ressorts de chacune desdites deuxièmes pinces pour le passage d'un organe d'ancrage de la cornière au cadre. Comme expliqué plus loin, cet organe d'ancrage, qui est prévu indépendamment des matelas et de leurs dispositifs de fixation, est utilisé pour renforcer, si nécessaire, la fixation au cadre du dispositif selon l'invention.

Dans la variante définie au paragraphe précédent, chaque matelas (de peau ou de cadre) présente avantageusement des encoches, de préférence régulièrement réparties, à un de ses bords pour le passage des organes d'ancrage précités. Ces encoches sont avantageusement ménagées dans une zone périphérique de soudure entre les deux films de couverture du matelas, laquelle zone est de préférence exempte de laine de verre. La bordure de chaque encoche peut avantageusement être renforcée. Cela étant, la réalisation de ces encoches reste très simple et n'a que très peu d'impact sur les coûts de revient du matelas. Certes, le déplacement tardif d'un dispositif de fixation entraîne alors la réalisation d'une encoche supplémentaire, mais cette opération est très rapide et ne pose aucune difficulté. En outre, il n'est pas nécessaire de reboucher l'encoche désormais inutilisée.

Avantageusement, le dispositif de fixation selon l'invention comprend, au moins d'un côté (c'est-à-dire au moins d'un côté du cadre une fois que le dispositif est monté sur le cadre), au moins un support de fixation d'un collier de réception d'un faisceau de câbles.

L'invention s'étend à un aéronef caractérisé en ce qu'il comprend au moins un dispositif de fixation selon l'invention.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs. Sur ces dessins :
- la figure 1 est une vue schématique éclatée en perspective d'un dispositif de fixation selon l'invention,
- la figure 2 est une vue schématique en coupe transversale du dispositif de la figure 1, et
- la figure 3 est une vue de face d'un matelas isolant pouvant être fixé à l'aide de dispositifs de fixation selon l'invention tels que celui illustré sur les figures 1 et 2.

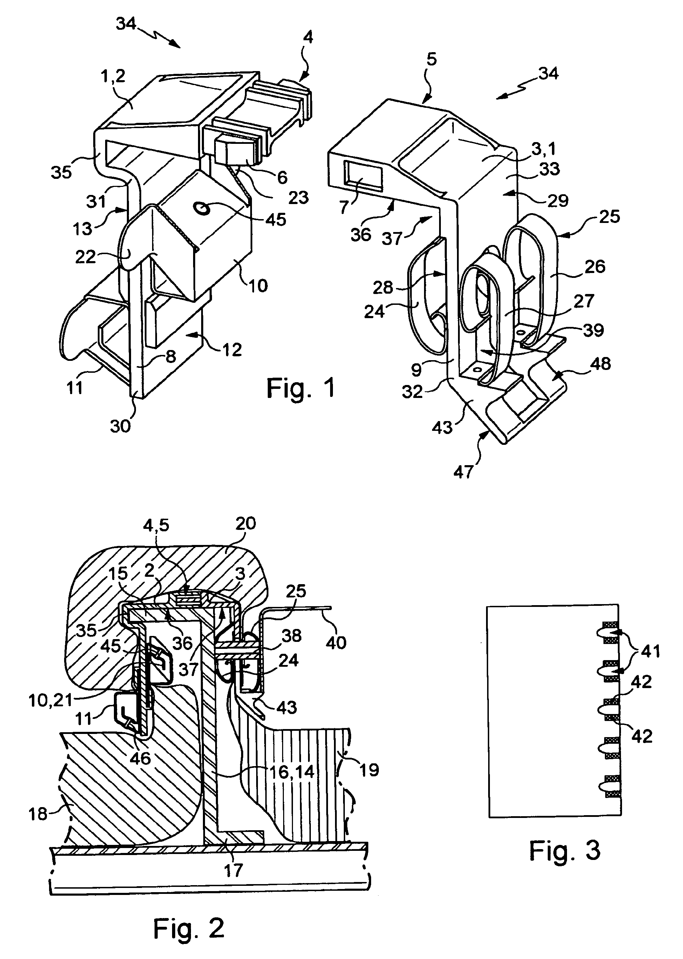

Les figures 1 et 2 illustrent un dispositif de fixation selon l'invention, adapté pour pouvoir être monté sur un cadre 14 d'un fuselage d'un aéronef. Un tel cadre comprend de façon usuelle une âme 16 et, de part et d'autre de cette âme, une aile 17 de fixation du cadre sur des lisses du fuselage ou sur une peau de celui-ci, et une aile 15 opposée libre. La figure 2 montre une vue d'un tel cadre, coupé par un plan transversal orthogonal à une direction longitudinale dudit cadre.

Le dispositif de fixation illustré est plus particulièrement adapté aux aéronefs, tels les aéronefs à fuselage en matériau composite, dans lesquels les systèmes sont portés et/ou raccordés à un réseau structurel électrique qui permet d'assurer la continuité électrique (dans un aéronef à fuselage métallique, cette continuité est assurée par le fuselage lui-même). Ce réseau comprend notamment des cornières en matériau conducteur (métallique par exemple) qui sont fixées directement au fuselage et notamment aux cadres, et qui définissent un potentiel électrique de référence de l'aéronef. Les cadres d'un tel aéronef sont ainsi percés de trous pour la fixation des cornières du réseau électrique structurel. Le dispositif de fixation illustré est destiné à être monté sur un tel cadre 14, en regard d'une cornière 40 du réseau structurel électrique.

Le dispositif de fixation selon l'invention comporte un corps 1 comprenant une première pièce 2 et une deuxième pièce 3, qui sont respectivement munies de moyens d'assemblage 4 et 5. En l'exemple illustré, ces moyens d'assemblage sont des moyens complémentaires d'assemblage par déformation élastique ; ils comprennent des languettes escamotables 6, formées dans la première pièce 2, et des fentes 7 de réception desdites languettes, ménagées dans la deuxième pièce 3.

Un tel dispositif de fixation sert à fixer au cadre 14 des matelas isolants, dont un premier matelas de peau 18 s'étendant d'un premier côté du cadre, un deuxième matelas de peau 19 s'étendant du second du cadre, et un matelas de cadre 20 recouvrant au moins un tronçon du cadre et assurant une continuité de l'isolation entre les deux matelas de peau 18 et 19.

Le corps 1 du dispositif de fixation illustré comporte une première membrure 8 formée dans la première pièce 2, et une deuxième membrure 9 formée dans la deuxième pièce 3. Lorsque le dispositif de fixation est observé monté sur le cadre 14, sa première membrure 8 s'étend sensiblement parallèlement à l'âme 16 du cadre, entre une extrémité proximale 31 solidaire d'une portion formant crochet 34 (définie plus précisément plus loin) du dispositif et une extrémité distale 30 libre. De même, la deuxième membrure 9 du dispositif de fixation s'étend sensiblement parallèlement à l'âme 16 du cadre, entre une extrémité proximale 33 solidaire de la portion formant crochet 34 et une extrémité distale 32 libre.

La première membrure 8 porte une première pince 10 de matelas de peau sur une face interne 12 (de ladite membrure), ladite face 12 étant destinée à être orientée vers le cadre 14, et plus précisément vers son âme 16. Cette première pince 10 de matelas de peau comprend une lame 21 métallique enroulée en spirale, fixée par une de ses extrémités à la membrure 8 -par exemple à la face interne 12 de celle-ci-. Cette lame 21, qui est relativement élastique, est agencée de façon à présenter, au repos, une face de contact qui repose voire appuie sur la face interne 12 de la membrure. Afin de garantir un pincement efficace et suffisant du matelas, la première pince 10 de matelas de peau comprend également un pion 45 d'élastomère en compression, inséré entre deux faces en regard de la spirale formée par la lame 21, de façon à pousser la face de contact de la lame 21 contre la face interne 12 de la membrure 8. Ladite lame 21 est agencée de telle sorte que la première pince 10 de matelas de peau ainsi formée puisse s'ouvrir vers l'extrémité distale 30 de la première membrure 8. Cette première pince 10 de matelas de peau constitue, du premier côté du cadre, un moyen d'accrochage d'un premier matelas de peau -tel le matelas 18- par pincement d'un bord dudit matelas. Cette première pince 10 de matelas de peau comprend également des moyens de préhension aidant à l'ouverture de la pince, sous la forme de deux oreilles latérales 22, 23 solidaires de la lame 21 et faisant saillie latéralement par rapport à la membrure 8.

La première membrure 8 porte également une première pince 11 de matelas de cadre sur une face externe 13 (de ladite membrure) opposée à sa face interne 12. A l'instar de la première pince 10 de matelas de peau, cette première pince 11 de matelas de cadre comprend d'une part une lame métallique enroulée en spirale qui exerce, à l'aide d'un pion 46 d'élastomère en compression (voir figure 2), une force de compression sur la face externe 13 de la membrure. Elle comprend d'autre part deux oreilles latérales de préhension, solidaires de ladite lame et faisant saillie latéralement par rapport à la membrure 8. En revanche, cette lame est agencée de telle sorte que la première pince 11 de matelas de cadre ainsi formée puisse s'ouvrir vers l'extrémité proximale 31 de la membrure 8. Cette première pince 11 de matelas de cadre constitue, du premier côté du cadre, un moyen d'accrochage d'un matelas de cadre -tel le matelas 20- par pincement d'un bord dudit matelas.

La première pince 10 de matelas de peau et la première pince 11 de matelas de cadre sont agencées de façon à obtenir à tout le moins une continuité dans l'isolation, et de préférence un recouvrement des matelas de peau 18 et matelas de cadre 20. A cette fin, la pince 10 de matelas de peau est de préférence située en regard d'une moitié proximale de la première membrure 8 (moitié de la membrure s'étendant à partir de son extrémité proximale 31), tandis que la pince 11 de matelas de cadre est située en regard d'une moitié distale de ladite membrure (moitié de la membrure s'étendant à partir de son extrémité distale 30).

La deuxième membrure 9 porte une deuxième pince 24 de matelas de peau sur une face interne 28 (de ladite membrure) destinée à être orientée vers l'âme 16 du cadre. Cette deuxième pince 24 de matelas de peau comprend deux lames ressorts métalliques en regard l'une de l'autre et écartées selon une direction qui, lorsque le dispositif est observé monté sur le cadre, correspond sensiblement à la direction longitudinale du cadre. Chaque lame ressort est enroulée et fixée par une de ses extrémités à la membrure 9 -en l'occurrence à sa face interne 28-. Lorsque le dispositif de fixation n'est pas monté sur un cadre, l'autre extrémité de chaque lame ressort repose contre la face interne 28 de la membrure sans exercer de force de compression sur cette dernière, ou est éventuellement légèrement écartée de ladite face interne 28. Lorsque le dispositif de fixation est monté sur un cadre 14 en regard d'une cornière 40 du réseau structurel électrique, les lames de la deuxième pince 24 de matelas de peau sont comprimées entre l'âme 16 du cadre et la face interne 28 de la membrure 9. Ces deux lames constituent, en coopération avec le cadre 14 et la cornière 40, un moyen d'accrochage d'un deuxième matelas de peau -tel le matelas 19- par pincement d'un bord dudit matelas, du second côté du cadre. A noter que les deux lames sont agencées de telle sorte que la deuxième pince 24 de matelas de peau ainsi formée puisse s'ouvrir vers l'extrémité distale 32 de la membrure 9.

La deuxième membrure 9 ,porte également une deuxième pince 25 de matelas de cadre sur une face externe 29 (de ladite membrure) opposée à sa face interne 28. A l'instar de la deuxième pince 24 de matelas de peau, cette deuxième pince 25 de matelas de cadre comprend deux lames ressorts 26, 27 en regard l'une de l'autre et écartées selon une direction correspondant sensiblement à la direction longitudinale du cadre. Chaque lame ressort est enroulée et fixée par une de ses extrémités à la membrure 9. Lorsque le dispositif de fixation n'est pas monté sur un cadre, chaque lame 26, 27 repose sans exercer de compression contre la face externe 29 ou est légèrement écartée de ladite face externe 29. Lorsque le dispositif de fixation est monté sur le cadre 14 en regard de la cornière 40, les lames 26, 27 sont comprimées entre la cornière 40 et la face externe 29 de la membrure 9. Ces deux lames 26, 27 constituent, en coopération avec le cadre 14 et la cornière 40, un moyen d'accrochage du matelas de cadre 20 par pincement d'un bord dudit matelas, du second côté du cadre. A noter que les deux lames sont agencées de telle sorte que la deuxième pince 25 de matelas de cadre ainsi formée puisse s'ouvrir vers l'extrémité proximale 33 de la membrure 9.

La deuxième pince 24 de matelas de peau et la deuxième 25 de matelas de cadre sont de préférence agencées en regard l'une de l'autre (et non décalées comme les pinces 10 et 11) de part et d'autre de la deuxième membrure 9, en raison d'une part de la longueur limitée (par la cornière) de ladite membrure 9 et d'autre part de la présence d'un organe d'ancrage de la cornière décrit plus loin. Cet agencement assure un recouvrement des matelas de peau 19 et matelas de cadre 20 et donc une continuité dans l'isolation.

Par ailleurs, la deuxième membrure 9 présente, à son extrémité distale 32, une extension 43 comprenant une face inclinée 47 prolongeant la face interne 28 de la membrure et une face 48 opposée concave en forme de V. Cette extension 43 réalise des moyens de préhension des deuxièmes pinces 24 de matelas de peau et 25 de matelas de cadre. Pour ouvrir la deuxième pince 24 de matelas peau, il suffit de saisir l'extension 43 en plaçant un ou deux doigts sur sa face inclinée 47 et d'écarter la membrure 9 de l'âme 16 du cadre (ce faisant, les lames de la pince 25 sont comprimées contre la cornière 40, tandis que la pression exercée sur les lames de la pince 24 se relâche). Pour ouvrir la deuxième pince 25 de matelas de cadre, il suffit de placer un ou deux doigts dans la concavité de la face 48 de l'extension 43 et d'appuyer sur cette extension de façon à rapprocher la membrure 9 de l'âme 16 du cadre (ce faisant, les lames de la pince 24 sont comprimées contre le cadre, tandis que la pression exercée sur les lames de la pince 25 se relâche).

En outre, la forme en V de la face 48 de l'extension permet de loger et d'attacher un collier de réception d'un faisceau de câbles (à la manière des attaches de colliers connues sous le nom de *"V-clamp").* A cet égard, entre deux dispositifs de fixation selon l'invention, agencés en regard de deux cornières du réseau structurel électrique qui se succèdent le long du cadre, il est possible d'ajouter un dispositif de fixation supplémentaire tel qu'illustré, dans le but de fournir un point d'attache pour un collier de réception de faisceau de câbles (à noter que le premier matelas de peau 18 et le bord du matelas de cadre 20 s'étendant du premier côté du cadre peuvent être insérés dans les pinces 10 et 11 de ce dispositif supplémentaire).

Les faces des diverses lames des pinces de matelas 10, 11, 24 et 25 qui sont destinées à être en contact avec le matelas correspondant sont de préférence recouvertes au moins partiellement d'une couche de matériau adhérent, tel qu'un élastomère, qui permet d'éviter que le matelas qu'elles pincent ne glisse et/ou ne soit endommagé. Lors de la pose des matelas, cette couche de matériau adhérent aide également à tendre le matelas entre deux dispositifs de fixation successifs, en vue d'éviter l'apparition de points bas par lesquels l'eau de condensation pourrait s'infiltrer.

Selon l'invention, le dispositif de fixation comprend une portion formant crochet 34 adaptée pour venir coiffer l'aile 15 (libre) du cadre et pincer ledit cadre, laquelle portion formant crochet 34 s'étend depuis l'extrémité proximale de 31 de la première membrure 8 jusqu'aux lames de la deuxième pince 24 de matelas de peau portée par la deuxième membrure 9.

Cette portion formant crochet 34 comporte notamment une première partie coudée 35 qui s'étend à partir de l'extrémité distale 31 de la membrure 8 et forme un U dans lequel vient s'encastrer un bord longitudinal libre de l'aile 15. Elle comporte ensuite une partie dans laquelle sont formés les moyens d'assemblage 4 et 5 des pièces 2 et 3, et dont une face interne 36, sensiblement plane, est destinée à reposer contre une face externe de l'aile 15 orientée vers l'intérieur du fuselage. Elle comporte enfin une deuxième partie coudée 37 se terminant par les lames de la deuxième pince 24 de matelas de peau.

De préférence, les angles obtus (vus du cadre) du dispositif de fixation -et notamment de sa portion formant crochet 34- destinés à venir en contact avec le cadre, au moins au cours du montage du dispositif, sont adoucis afin de ne pas risquer d'endommager le cadre.

Il est à noter que la cornière 40 est fixée au cadre 14 notamment par un organe de fixation comprenant une vis (non représentée) logée dans une entretoise 38 (voir figure 2). L'entretoise 38 s'étend donc entre l'âme 16 du cadre et la cornière 40. La deuxième membrure 9 du dispositif de fixation selon l'invention présente une lumière 39 pour le passage de cette entretoise 38. Cette lumière 39 s'étend entre les deux lames de la deuxième pince 24 de matelas de peau et entre les deux lames 26, 27 de la deuxième pince 25 de matelas de cadre. La lumière 39 est fermée au niveau de l'extension 43 de la membrure 9. L'entretoise 38 (ou plus exactement la vis qu'elle entoure) contribue donc à empêcher tout déplacement du dispositif de fixation selon la direction longitudinale du cadre. Elle contribue aussi à empêcher que le dispositif de fixation ne tourne autour d'un axe parallèle à la direction longitudinale du cadre et ne se désolidarise de ce dernier. L'entretoise 38 renforce ainsi l'effet de fixation déjà obtenu par la portion formant crochet 34 (et notamment par la partie coudée 35 en U et par les lames de la pince 24). Le trou (non représenté) ménagé dans le cadre dans le prolongement de l'entretoise- pour ancrer la vis de fixation de la cornière 40 profite donc également au dispositif de fixation de matelas selon l'invention. Mais il est à noter que ce trou n'est pas dédié à l'ancrage du dispositif de fixation. A l'inverse, dans l'art antérieur, des trous spécifiques sont prévus dans les cadres, en supplément des trous de fixation des systèmes, pour permettre l'ancrage des dispositifs de fixation de matelas. L'invention permet donc de réduire le nombre de trous à prévoir dans les cadres du fuselage et les renforts de structure correspondants.

A noter que la présence de l'entretoise 38 explique que les pinces 24 et 25 portées par la deuxième membrure 9 comportent de préférence chacune deux lames, destinées à s'étendre de part et d'autre de l'entretoise afin de garantir un bon accrochage et un bon maintien des matelas correspondants.

Par ailleurs, compte tenu de la présence de cette entretoise 38, le dispositif de fixation illustré est utilisé pour la fixation de matelas de peau et de cadre, tels celui illustré sur la figure 3, présentant des encoches correspondantes sur un de leurs bords. Avantageusement, ces matelas comprennent des bandes 42 d'un matériau apte à favoriser la rétention du matelas par les pinces 24 ou 25 des dispositifs de fixation ; ces bandes s'étendent donc de part et d'autre de chaque encoche, en bordure de celle-ci. Elles peuvent être réalisées en Velcro®. Comparés aux matelas utilisés avec les dispositifs de fixation antérieurs connus, les matelas isolants selon l'invention sont percés d'encoches (et non de trous circulaires écartés du bord) sur un seul de leurs bords (contre deux bords opposés pour les matelas antérieurs). Leurs performances d'isolation et d'étanchéité sont améliorées, et leur fabrication est plus simple et moins coûteuse.

Le déplacement tardif et imprévu d'une cornière 40 du réseau structurel électrique oblige à déplacer de même le dispositif de fixation correspondant et donc à réaliser un nouveau trou de fixation de la cornière dans le cadre 14 et deux encoches de matelas supplémentaires, l'une dans le matelas de peau 19 et l'autre dans le matelas de cadre 20. Le déplacement tardif d'un dispositif de fixation antérieur connu obligeait à réaliser un nouveau trou dans le cadre pour le passage du corps allongé du dispositif de fixation, et quatre trous supplémentaires dans les matelas (un trou supplémentaire pour chaque matelas de peau et deux trous supplémentaires pour le matelas de cadre). Les impacts d'une modification tardive des systèmes, en termes de coûts de main d'oeuvre et de dégradation des performances des matelas isolants, sont donc moindres grâce à l'invention.

La mise un place d'un dispositif de fixation tel qu'illustré s'effectue comme suit :
- après avoir posé le premier matelas de peau 18 et le deuxième matelas de peau 19, on monte le dispositif de fixation sur le cadre par emboîtement de sa portion formant crochet 34 sur l'aile 15 dudit cadre,
- si ce n'est pas déjà fait, on agence l'organe d'ancrage de la cornière, que l'on fixe à l'âme 16 du cadre,
- on fixe ensuite la cornière 40 à cet organe d'ancrage,
- on insère, dans la première pince 10 de matelas de peau, le bord du premier matelas de peau 18 jouxtant le cadre,
- on insère, dans la deuxième pince 24 de matelas de peau, le bord du deuxième matelas de peau 19 jouxtant le cadre
- on recouvre au moins un tronçon du cadre et le dispositif de fixation à l'aide du matelas de cadre 20, et on insère dans la première pince 11 de matelas de cadre le bord du matelas de cadre 20 s'étendant du premier côté du cadre ; on insère de façon similaire, dans la deuxième pince 25 de matelas de cadre, le bord opposé du matelas de cadre 20 s'étendant du second côté du cadre.

L'invention peut faire l'objet de nombreuses variantes par rapport au mode de réalisation illustré, dès lors que ces variantes entrent dans le cadre délimité par les revendications.

Par exemple, il est possible de doter la deuxième membrure de pinces de matelas de cadre et de peau identiques ou similaires à celles de la première membrure, qui assurent un bon maintien des matelas indépendamment de la présence d'une cornière. Un tel dispositif de fixation peut être agencé en tout point du cadre. Il convient toutefois de le doter d'une portion formant crochet de préférence rigide et en tout état de cause apte à pincer le cadre seule et suffisamment fortement pour éviter tout glissement du dispositif de fixation le long dudit cadre. En outre, un tel dispositif de fixation permet de fixer des matelas dépourvus d'encoche, et dont la fabrication est donc encore simplifiée.

## Revendications

1. Dispositif pour la fixation, à un cadre (14) d'un fuselage d'un aéronef, d'au moins un matelas isolant (20), dit matelas de cadre, recouvrant au moins un tronçon dudit cadre, comprenant:
- un premier moyen (11) d'accrochage par pincement, dit première pince de matelas de cadre, destiné à s'étendre d'un premier côté du cadre (14) et adapté pour recevoir et pincer un premier bord du matelas de cadre (20).
- un deuxième moyen (25) d'accrochage par pincement, dit deuxième pince de matelas de cadre, destiné à s'étendre du second côté du cadre et adapté pour recevoir et pincer, seul ou en coopération avec un ou plusieurs éléments structurels (14, 40) de l'aéronef, un deuxième bord du matelas de cadre (20), opposé au premier bord, et dont
le premier moyen d'accrochage par pincement et le deuxième moyen d'accrochage par pincement comportent chacun une ouverture dans laquelle peuvent être insérés respectivement un premier bord du matelas de cadre et un second bord du matelas de cadre et lesdits moyens d'accrochage sont aptes à serrer le bord de matelas de cadre correspondant de façon à empêcher son extraction de l'ouverture correspondante, au moins ponctuellement.

2. Dispositif de fixation selon la revendication 1, pour la fixation d'un matelas isolant (18), dit premier matelas de peau, recouvrant une portion de peau du fuselage d'un premier côté du cadre, et d'un autre matelas isolant (19), dit deuxième matelas de peau, recouvrant une portion de peau du fuselage du second côté du cadre, **Caractérisé en ce qu'**il comprend :
- un troisième moyen (10) d'accrochage par pincement, dit première pince de matelas de peau, destiné à s'étendre du premier côté du cadre et adapté pour recevoir et pincer un bord du premier matelas de peau (18),
- un quatrième moyen (24) d'accrochage par pincement, dit deuxième pince de matelas de peau, destiné à s'étendre du second côté du cadre et adapté pour recevoir et pincer, seul ou en coopération avec un ou plusieurs éléments structurels (14, 40) de l'aéronef, un bord du deuxième matelas de peau (19).

3. Dispositif de fixation selon l'une des revendications 1 ou 2, **caractérisé en ce qu'**il comprend une portion formant crochet (34) adaptée pour venir coiffer une aile (15) dudit cadre et pincer ce dernier seule ou en coopération avec un élément structurel (40) de l'aéronef de façon à assurer la fixation du dispositif au cadre.

4. Dispositif de fixation selon la revendication 3, **caractérisé en ce qu'**il comporte un corps (1) définissant au moins partiellement ladite portion formant crochet (34), et **en ce que** ce corps comprend au moins deux pièces (2, 3) munies de moyens complémentaires (4,5,6,7) d'assemblage par déformation élastique permettant l'assemblage et la séparation desdites pièces au niveau de la portion formant crochet.

## Claims

1. A device for fastening, to a frame (14) of an aircraft fuselage, at least one insulating blanket (20), designated frame blanket, covering at least one section of said frame, comprising:
- a first means (11) for anchorage by pinching, designated first frame blanket clip, provided to extend on a first side of the frame (14) and adapted to receive and pinch a first edge of the frame blanket (20),
- a second means (25) for anchorage by pinching, designated second frame blanket clip, provided to extend on the second side of the frame and adapted to receive and pinch, alone or in cooperation with one or more structural members (14, 40) of the aircraft, a second edge of the frame blanket (20), which is an opposite edge to the first edge, and of which
the first means for anchorage by pinching and the second means for anchorage by pinching each comprise an opening in which may respectively be inserted a first edge of the frame blanket and a second edge of the frame blanket and said anchorage means are adapted to clamp the corresponding frame blanket edge so as to prevent its withdrawal from the corresponding open, at least locally.

2. A fastening device according to claim 1, for the fastening of an insulating blanket (18), designated first skin blanket, covering a portion of skin of the fuselage on a first side of the frame, and another insulating blanket (19), designated second skin blanket, covering a portion of skin of the fuselage on a second side of the frame, **characterized in that** it comprises:
- a third means (10) for anchorage by pinching, designated first skin blanket clip, provided to extend on the first side of the frame and adapted to receive and pinch an edge of the first skin blanket (18),
- a fourth means (24) for anchorage by pinching, designated second skin blanket clip, provided to extend on the second side of the frame and adapted to receive and pinch, alone or In cooperation with one or more structural members (14, 40) of the aircraft, an edge of the second skin blanket (19).

3. A fastening device according to one of claims 1 or 2, **characterized in that** it comprises a hook-forming portion (34) adapted to fit over a flange (15) of said frame and pinch the frame alone or in cooperation with a structural member (40) of the aircraft so as to provide the fastening of the device to the frame.

4. A fastening device according to claim 3, **characterized in that** it comprises a body (1) at least partially defining said hook-forming portion (34), and **in that** said body comprises at least two parts (2, 3) provided with complementary means (4, 5, 6, 7) for assembly by elastic deformation enabling the assembly and the separation of said parts at the location of the hook-forming part.

## Patentansprüche

1. Vorrichtung für die Fixierung wenigstens einer Isoliermatte (20), sogenannten Rahmenmatte, die wenigstens einen Abschnitt des Rahmens bekleidet, an einem Rahmen (14) eines Rumpfes eines Luftfahrzeugs, umfassend:
- ein erstes Klemmbefestigungsmittel (11), sogenannte erste Rahmenmattenklammer, das dazu bestimmt ist, sich auf einer ersten Seite des Rahmens (14) zu erstrecken, und dazu ausgelegt ist, einen ersten Rand der Rahmenmatte (20) aufzunehmen und festzuklemmen,
- ein zweites Klemmbefestigungsmittel (25), sogenannte zweite Rahmenmattenklammer, das dazu bestimmt ist, sich auf der zweiten Seite des Rahmens zu erstrecken, und dazu ausgelegt ist, allein oder mit einem oder mehreren Strukturelement(en) (14, 40) des Luftfahrzeugs zusammenwirkend einen dem ersten Rand gegenüberliegenden zweiten Rand der Rahmenmatte (20) aufzunehmen und festzuklemmen, und wobei
das erste Klemmbefestigungsmittel und das zweite Klemmbefestigungsmittel jeweils eine Öffnung umfassen, in die ein erster Rand der Rahmenmatte bzw. ein zweiter Rand der Rahmenmatte eingefügt werden können, und die Befestigungsmittel geeignet sind, den entsprechenden Rahmenmattenrand einzuklemmen, um dessen Herausziehen aus der entsprechenden Öffnung wenigstens punktuell zu verhindern.

2. Fixiervorrichtung nach Anspruch 1, für die Fixierung einer Isoliermatte (18), sogenannten ersten Hautmatte, die einen Hautabschnitt des Rumpfes auf einer ersten Seite des Rahmens bekleidet, sowie einer weiteren Isoliermatte (19), sogenannten zweiten Hautmatte, die einen Hautabschnitt des Rumpfes auf der zweiten Seite des Rahmens bekleidet, **dadurch gekennzeichnet, dass** sie umfasst:
- ein drittes Klemmbefestigungsmittel (10), sogenannte erste Hautmattenklammer, das dazu bestimmt ist, sich auf der ersten Seite des Rahmens zu erstrecken, und dazu ausgelegt ist, einen Rand der ersten Hautmatte (18) aufzunehmen und festzuklemmen,
- ein viertes Klemmbefestigungsmittel (24), sogenannte zweite Hautmattenklammer, das dazu bestimmt ist, sich auf der zweiten Seite des Rahmens zu erstrecken, und dazu ausgelegt ist, allein oder mit einem oder mehreren Strukturelement(en) (14, 40) des Luftfahrzeugs zusammenwirkend einen Rand der zweiten Hautmatte (19) aufzunehmen und festzuklemmen.

3. Fixiervorrichtung nach einem der Ansprüche 1 oder 2, **dadurch gekennzeichnet, dass** sie einen einen Haken bildenden Abschnitt (34) umfasst, der dazu ausgelegt ist, einen Flügel (15) des Rahmens zu bedecken und letzteren allein oder mit einem Strukturelement (40) des Luftfahrzeugs zusammenwirkend festzuklemmen, um die Fixierung der Vorrichtung an dem Rahmen sicherzustellen.

4. Fixiervorrichtung nach Anspruch 3, **dadurch gekennzeichnet, dass** sie einen Körper (1) umfasst, der den einen Haken bildenden Abschnitt (34) wenigstens teilweise definiert, und dass dieser Körper wenigstens zwei Teile (2, 3) umfasst, die mit ergänzenden Mitteln (4,5, 6,7) zum Verbinden durch elastische Verformung ausgestattet sind, die das Verbinden und das Trennen der Teile im Bereich des einen Haken bildenden Abschnittes ermäglichen.
